# EUROPEAN PATENT APPLICATION

(11) **EP 4 575 476 A1**
(43) Date of publication of application: **25.06.2025**
(21) Application number: 24215071.2
(22) Date of filing: 25.11.2024
(51) Int. Cl.: G01N 23/2252

(54) **COMPOSITIONAL MAPPING EMPLOYING VARIABLE CHARGED PARTICLE BEAM PARAMETERS FOR IMAGING AND ENERGY-DISPERSIVE X-RAY SPECTROSCOPY**

(30) Priority: 21.12.2023 US 202318391947
(71) Applicant: FEI COMPANY, Hillsboro, OR 97124 (US)
(72) Inventor: LEVIEN, Cody, Hillsboro, 97124 (US); OWEN, Michael, Geebung, 3179 (AU)
(74) Representative: Boult Wade Tennant LLP

(57) **Abstract**

A method of mapping compositional variation within a specimen comprises: acquiring an electron backscatter image of the surface of the specimen using a first set of electron beam parameters; identifying, from the electron backscatter image, a plurality of locations of areas or points on the specimen to be analyzed by energy dispersive X-ray spectroscopy (EDS); acquiring an EDS spectrum from each of the identified locations or points using a second set of electron beam parameters that are different than the first set of electron beam parameters; and generating a map of compositional variation across the specimen from the plurality of EDS spectra.

## Description

### TECHNICAL FIELD

The present application relates to charged particle beam microscopes and charged particle beam microscopy. More particularly, the present application relates to systems and methods of imaging and compositional mapping of specimens using variable beam parameters of an incident charged particle beam.

### INCORPORATION BY REFERENCE

All patents, patent application publications and other published articles mentioned herein are hereby incorporated by reference herein in their entirety as if set forth fully herein.

### BACKGROUND

Many biological and chemical and chemical analysis techniques require the acquisition of spatially resolved data relating to the areal or volumetric distribution of various structures, molecules and/or elements within one or more samples. To collect such data, a chemical analysis apparatus may be closely paired with an imaging device. For example, within the medical sciences, the distributions, within tissue samples, of special colored or fluorescent tags may be used to identify specific proteins, diseased tissues, regions of gene expression, cell structures, etc. The study of such distributions may make use of optical detectors, including cameras, interfaced to optical or electron microscopes. Within the semiconductor industry, distributions of impurities or structural deviations within wafers or within device-bearing layers may be collected using an electron microscope. Within the mining industry, distributions of minerals or of elements within the various minerals may be studied by detecting characteristic X-rays that are emitted from a surface of a rock specimen when the sample studied under an electron microscope. In some instances, the specimen may be a fine particulate sample comprised of numerous separate particles of sand or silt that are not adhered to one another. Generally, the specimen that is analyzed may be any flat surface of any material. For example, in some other instances, the specimen may comprise a layer of a semiconductor device or a polished planar surface of a rock sample. In many cases, either the separate particles or the rock sample may be embedded into a mounting medium such as epoxy.

In many cases, samples that are prepared for microscopic analysis are much larger than the field of view of the microscope that is used to image the sample. Therefore, an important first step for data acquisition is the precise understanding of the overall structure of a sample under investigation, including finding and localizing the various regions or structures of interest in terms of sample coordinates and recording those coordinates for future studies and post-data-acquisition visualizations. A software product, known as Thermo Scientific^{™} Maps^{™} Software, is available from Thermo Fisher Scientific corporation of Waltham, Massachusetts USA for facilitating not only this first step but also subsequent data collection and data analysis steps. During data collection, the Maps^{™} Software can automate the acquisition of a series of tiled images in order to create a full overview of a sample. The Maps^{™} Software can also automatically stitch together the resulting images together to form a single overview image. Once acquired, individual images and tile sets may be superimposed on top of each other and organized in an editable multi-layer structure. Individual layers can be selectively hidden, displayed, transparently overlaid, and aligned with other images or layers. Users can freely zoom and pan to explore the acquired data and make annotations. The area encompassed by the tile set can be as large as the travel range of the sample stage. The software can be used to acquire and analyze data from any type of microscope, such as an optical microscope, a scanning electron microscope, a transmission electron microscope, a focused ion beam microscope, etc. Finally, the software can also combine and compare images of a single specimen obtained from different detectors or systems - for example, images of a specimen obtained from both backscattered electrons as well as from emission of secondary electron imaging or stimulated radiation of X-rays.

Energy-dispersive X-ray spectroscopy (EDS, EDX, EDXS or XEDS) is an analytical technique that is particularly useful for elemental mapping of samples within an electron microscope. In such analyses, the emission of characteristic X-rays from a specimen is detected while a beam of electrons is directed onto the sample by means of an electron microscope column of a scanning electron microscope (SEM), a transmission electron microscope (TEM) or a scanning transmission electron microscope (STEM). Under excitation by the electron beam, a respective characteristic X-ray emission spectrum is emitted by each of a plurality of elements within the sample. The X-ray spectral signals from each such element may be separated from one another and recorded as a function of position on the specimen (e.g., as a set of images, such as the tiled and/or layered images described above).

One useful feature of the Maps^{™} Software is its ability to automatically execute a second instance of data collection across the surface of a specimen based upon its analysis of results of a prior first instance of data collection. This feature is useful for compositional mapping in that, during such mapping, a first episode of image data collection may be followed by analysis of the image data and then, based on the analysis, a subsequent episode of compositional data collection may be planned and executed. The intervening analyses may comprise automatic segmentation of an image -which may be an overview image constructed from registration of several acquired images - into individual particles and/or grains by automatic identification of particle boundaries and/or grain boundaries. Once the image has been segmented, the software can control a specimen stage and/or a scannable incident beam to interrogate selected points within each identified specimen particle or grain. As one example, the initial imaging may be performed by detecting, by a first detector, backscattered electrons emitted from a sample within an electron microscope and the subsequent compositional data collection may be performed by energy-dispersive X-ray spectroscopy using a second detector within the same microscope.

Unfortunately, currently-available compositional mapping algorithms that pertain to electron-microscope-based EDS analyses do not provide for varying electron beam voltage during data acquisitions. Consequently, an entire data acquisition session, encompassing both detection of backscattered electrons for imaging and detection of emitted X-rays for chemical analysis, must share the same electron beam settings (e.g., beam energy as controlled by beam accelerating voltage). In order to obtain sufficient X-ray signal intensity at each sampled location on a specimen, it is necessary to utilize a uniformly high beam accelerating voltage. However, the present inventors have discovered that such conditions can result in less-than-optimal imaging of back scattered electrons from granular samples. This problem occurs because, using high beam voltage, electron penetration into the sample often creates a large "depth of field" that causes the resulting images to often display blurry images having "out of focus" grain boundaries. The blurriness is an artifact of the larger electron interaction volume at high beam voltage, resulting in surface features being blurred with subsurface features.

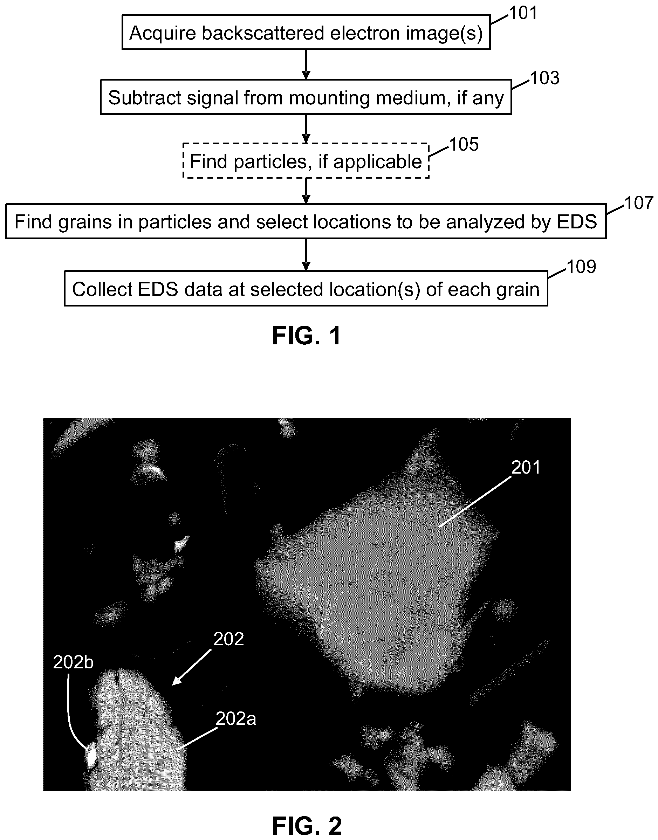

FIG. 1 is a flow diagram of a known algorithmic workflow for generating a compositional map of a specimen. In a first step, step **101,** a backscattered electron (BSE) image of the specimen is acquired. The image may comprise just a single image frame (i.e., without movement of a stage holding the specimen during the image acquisition) or may be a composite image generated by aligning and subsequently overlaying and/or merging a plurality of image frames. In the next step, step **103,** a background signal attributable to a specimen mounting medium (e.g., epoxy), if any, is subtracted from the acquired backscattered electron signals that compose the image. In step **105,** the background-corrected image is automatically analyzed to identify spatially separated particles (if any) of the specimen and to determine the boundaries and stage coordinates of such particles. In step **107,** the background-corrected image is further automatically analyzed to identify individual grains within the specimen and to determine the boundaries positional coordinates of such grains, as referenced to either a sample-based and/or a laboratory-based reference coordinate system. Finally, in step **109,** one or more sampling locations within each one of a plurality of the identified grains are chosen and an EDS compositional analysis is obtained at each such location by measuring the energy spectra of X-rays that are emitted from each sampling location during the directing of the electron beam onto the respective sampling location.

Because the known algorithmic workflows for generating a compositional map (FIG. 1) do not provide for electron beam adjustments, identical electron beam parameters (e.g., beam current and beam energy, the latter as controlled by beam accelerating voltage) must be employed during acquisition of the backscattered electron image (step **101**) and the EDS compositional analysis (step **109**). Unfortunately, the inventors have discovered that beam parameters that are optimal for obtaining acceptable backscattered electron images are not optimal for obtaining X-ray spectra and vice versa. If the beam parameters are initially set at values (e.g., 5 nA beam current and 20-30 keV beam accelerating voltage) that are chosen to produce acceptable X-ray spectra within a reasonable data acquisition time, then the grain boundaries in the backscattered electron images are not sharp due to the penetration of the electrons into the subsurface of grains. The poor imaging leads to uncertainty in choosing the most representative locations for the subsequent compositional analysis. As a practical example, a "reasonable" X-ray spectral analysis rate corresponds to obtaining, in not more than two hours, a full collection of X-ray spectra, from a 30 mm diameter round sample, at respective analyzed surface locations (i.e., points) that are spaced within a Cartesian grid having 10 µm grid spacing. This corresponds to a spectral collection rate of not less than about 110 spectra per second. So that each such X-ray spectrum has acceptable signal-to-noise characteristics, each X-ray spectrum should correspond to the detection of about 1000 X-ray photons per millisecond. The collection area of the X-ray detector linearly affects the collection speed; detectors having a collection area of about 100 mm² are preferred for this task.

FIG. 2 is a backscattered electron image that illustrates a typical example of the problem that arises when the same beam voltage that is used for X-ray analysis is also employed for BSE imaging of the same sample. In particular, the edges of particles **201** and **202** and the inter-grain boundary between grains **202a** and **202b** of particle **202** are not well defined. On the other hand, if the electron beam is adjusted so that the edges of particles and grains become well defined, then extra analysis time is required to obtain noise-free X-ray spectra, thereby reducing overall analytical efficiency. Accordingly, there is a need in the art for an imaging and compositional mapping technique that maintains both accuracy and efficiency.

### SUMMARY

According to a first aspect of the present disclosure, a method of mapping compositional variation within a specimen comprises: acquiring an electron microscope image of the surface of the specimen using a first set of electron beam parameters; identifying, from the electron backscatter image, a plurality of locations of areas or points on the specimen to be analyzed by energy dispersive X-ray spectroscopy (EDS); acquiring an EDS spectrum from each of the identified locations or points using a second set of electron beam parameters that are different than the first set of electron beam parameters; and generating a map of compositional variation across the specimen from the plurality of EDS spectra. Generally, the electron microscope image is acquired by backscattered electron (BSE) imaging using a scanning electron microscope (SEM). However, if the specimen comprises a thin plate (possibly thinned by ion beam milling) having a thickness of less than about 200 nm or, depending on the type of sample, less than about 100 nm, then the electron microscope image may be acquired by transmission electron microscopy using a transmission electron microscope (TEM).

According to a second aspect of the present disclosure, an electron microscope system comprises: (a) an electron source and an electron-optical column; (b) a sample stage within a vacuum chamber for supporting a specimen of a sample; (c) a first detector for detecting electrons that are backscattered emitted from the specimen upon impingement of the electron beam onto the specimen; (d) a second detector for detecting X-rays emitted from the specimen upon impingement of the electron beam onto the specimen; and (e) one or more computer processors comprising executable instructions which, when executed by the one or more computer processors, actuate the one or more computer processors to: (i) cause the first detector to acquire an electron microscope image of the surface of the specimen using a first set of electron beam parameters; (ii) cause the second detector to acquire an EDS spectrum from each of a plurality of locations or points on the specimen surface that are identified from the electron microscope image, wherein the acquiring of the plurality of EDS spectra uses a second set of electron beam parameters that are different than the first set of electron beam parameters; and (iii) generate a map of compositional variation across the specimen from the plurality of EDS spectra. Generally, the electron microscope image is acquired by backscattered electron (BSE) imaging using a scanning electron microscope (SEM). However, if the specimen comprises a thin plate (possibly thinned by ion beam milling) having a thickness of less than about 200 nm or, depending on the type of sample, less than about 100 nm, then the electron microscope image may be acquired by transmission electron microscopy using a transmission electron microscope (TEM).

### BRIEF DESCRIPTION OF THE DRAWINGS

The above noted and various other aspects of the present invention will become apparent from the following description which is given by way of example only and with reference to the accompanying drawings, not necessarily drawn to scale, in which:
FIG. 1 is a flow diagram of a known algorithmic workflow for generating a compositional map of a specimen;
FIG. 2 is an electron micrograph image of a specimen comprising multiple particles having multiple grains as obtained using an electron beam voltage that is chosen in accordance with the known algorithmic workflow as diagramed in FIG. 1;
FIG. 3 is a schematic depiction of an embodiment of a charged particle beam microscope system that can be used in conjunction with the methods of the present disclosure;
FIG. 4 is a flow diagram of an algorithmic workflow for generating a compositional map of a specimen in accordance with the present teachings; and
FIG. 5 is an electron micrograph image of the specimen of FIG. 2 as obtained wherein the electron beam voltage is chosen in accordance with an algorithmic workflow of the present teachings.

### DETAILED DESCRIPTION

The following description is presented to enable any person skilled in the art to make and use the invention and is provided in the context of a particular application and its requirements. Various modifications to the described embodiments will be readily apparent to those skilled in the art and the generic principles herein may be applied to other embodiments. Thus, the present invention is not intended to be limited to the embodiments and examples shown but is to be accorded the widest possible scope in accordance with the features and principles shown and described. To fully appreciate the features of the present invention in greater detail, please refer to FIGS. 1-4 in conjunction with the following description.

In the description of the invention herein, it is understood that a word appearing in the singular encompasses its plural counterpart, and that a word appearing in the plural encompasses its singular counterpart, unless implicitly or explicitly understood or stated otherwise. Furthermore, it is understood that, for any given component or embodiment described herein, any of the possible candidates or alternatives listed for that component may generally be used individually or in combination with one another, unless implicitly or explicitly understood or stated otherwise. Moreover, it is to be appreciated that the figures, as shown herein, are not necessarily drawn to scale, wherein some of the elements may be drawn merely for clarity of the invention. Also, reference numerals may be repeated among the various figures to show corresponding or analogous elements. Additionally, it will be understood that any list of candidates or alternatives is merely illustrative, not limiting, unless implicitly or explicitly understood or stated otherwise.

Unless otherwise defined, all other technical and scientific terms used herein have the meaning commonly understood by one of ordinary skill in the art to which this invention belongs. In case of conflict, the present specification, including definitions, will control. It will be appreciated that there is an implied "about" prior to any quantitative terms mentioned in the present description, such that slight and insubstantial deviations are within the scope of the present teachings. Whenever "substantially," "approximately," "about," or similar language is explicitly used in combination with a specific value, variations up to and including 10% of that value are intended, unless explicitly stated otherwise. In addition, the use of "comprise", "comprises", "comprising", "contain", "contains", "containing", "include", "includes", and "including" are not intended to be limiting. As used herein, "a" or "an" also may refer to "at least one" or "one or more." Also, the use of "or" is inclusive, such that the phrase "A or B" is true when "A" is true, "B" is true, or both "A" and "B" are true.

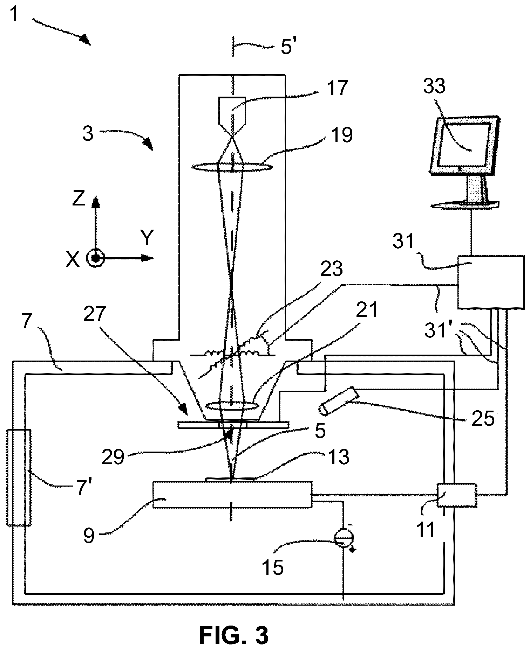

FIG. 3 is a highly schematic depiction of an embodiment of a charged particle beam microscope system that can be used in conjunction with the methods of the present disclosure. More specifically, FIG. 1 depicts an embodiment of a Scanning Electron Microscope (SEM) **1.** The microscope **1** comprises an electron-optical column **3,** which produces a beam **5** of charged particles (in this case, an electron beam) that propagates along a particle-optical axis **5'.** The electron-optical column **3** is mounted within a vacuum chamber **7,** which comprises a specimen carrier **9** and an associated stage/actuator **11** for holding and/or positioning a specimen **13.** The vacuum chamber **7** is evacuated using vacuum pumps (not depicted). With the aid of a voltage source (not shown), the specimen carrier **9,** or at least the specimen **13,** may, if desired, be biased (floated) to an electrical potential with respect to ground.

The particle-optical column **3** comprises an electron source **17** (such as a Schottky emitter), electrostatic and/or magnetic lenses **19, 21** (in general, more complex in structure than the schematic depiction here) to focus the electron beam **5** onto the specimen **13,** and a deflection unit **23** (shown schematically) to perform beam deflection/scanning of the beam **5.** When the beam **5** impinges on or is scanned across the specimen **13,** it will cause the emission of various types of "stimulated" emission, such as emission of backscattered or secondary electrons, and/or radiation, such as emission of X-rays and/or cathodoluminescence (infra-red, visible and/or ultra-violet photons). One or more of these radiation types can then be sensed/recorded using one or more detectors, which may form an image, spectrum, diffractogram, etc., typically by assembling a "map" (or "matrix") of detector output as a function of scan position on the specimen. FIG. 1 shows two such detectors, **25, 27.** According to various embodiments in accordance with the present disclosure, detector **25** may be an X-ray detector (such as an SDD or Si(Li) sensor) and detector **27** may be a detector of backscattered electrons that are emitted from the specimen **13** in response to the impact of the electron beam **5** onto the specimen. The detector **27** may be a segmented electron detector, comprising a plurality of independent detection segments (e.g., quadrants) disposed about a central aperture **29** (that allows passage of the electron beam **5**). These are mere examples and the skilled artisan will understand that other detector types, numbers and geometries/configurations are possible.

The electron microscope system **1** further comprises a controller/computer processing unit **31** for controlling, *inter alia,* the lenses **19** and **21,** the deflection unit **23,** and detectors **25, 27,** and for displaying information gathered from the detectors **25, 27** on a display unit **33** (such as a flat panel display). Such control occurs via control lines (buses) **31'.** The controller **31** (or another controller) can additionally be used to perform various mathematical processing, such as combining, integrating, subtracting, false coloring, edge enhancing, and other processing known to the skilled artisan. In addition, automated recognition processes (e.g., as used for particle analysis or grain analysis) may be included in such processing.

Also depicted in FIG. 1 is a vacuum port **7',** which may be opened so as to introduce and/or remove items (components, specimens) to/from the interior of vacuum chamber **7,** or onto which, for example, an ancillary device or module (not depicted) may be mounted. Th microscope system **1** may comprise a plurality of such ports **7',** if desired.

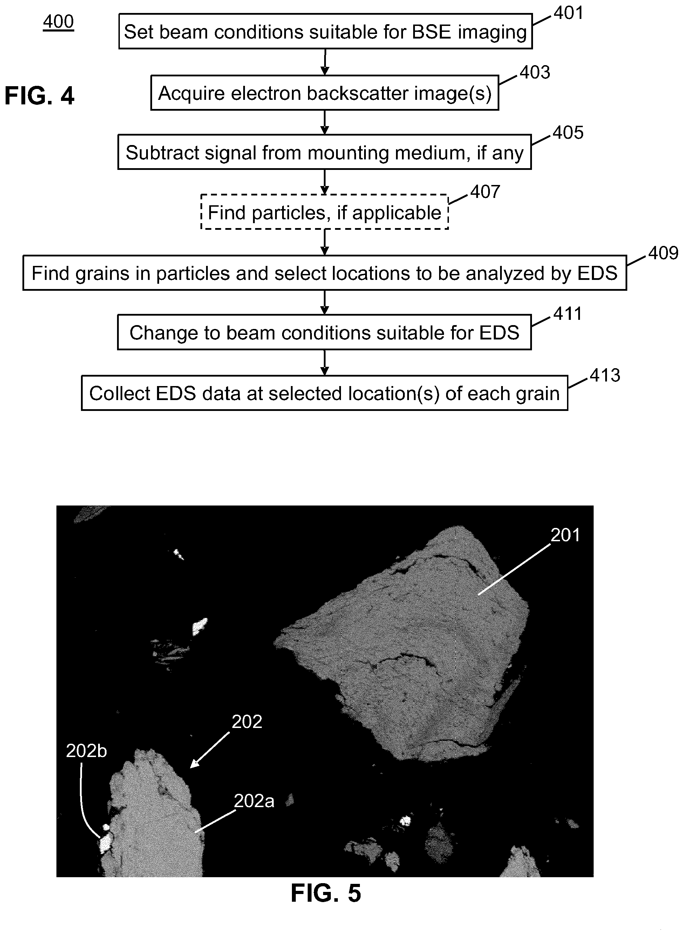

FIG. 4 is a flow diagram of an algorithmic workflow method **400,** in accordance with the present teachings, for generating a compositional map of a specimen utilizing an electron microscope. In the first step, step **401** of the method **400,** the beam parameters of an electron beam that is incident onto the specimen are set to values that are suitable for electron microscope imaging, such as backscattered electron (BSE) imaging. These electron beam parameters, which include electron beam accelerating voltage and which may, in some embodiments, include beam current, may be automatically set to predetermined values in step **401.** According to some embodiments, the beam parameters that are to be set in step **401** and subsequently used for imaging may be input by a user based on prior experiences with specimens comprising materials, provenance and/or preparation methodologies that is/are similar to that/those of the specimen being analyzed. Generally, the beam parameters are chosen and set so to obtain images having sharp, well defined image features, such as features corresponding to particle boundaries and/or grain boundaries.

In step **403** of the method **400,** an electron microscope image, such as a backscattered electron image, is acquired using the electron beam parameters that are set in step **401.** The image may comprise just a single image frame (i.e., without movement of a stage holding the specimen during the image acquisition). Alternatively, the image may be a composite image generated by aligning and subsequently overlaying and/or merging a plurality of image frames obtained from a series of individual image frames corresponding to respective locations across a surface of the specimen. According to the invention, the electron beam parameters that are selected in step **401** and subsequently employed during the execution of the step **403** will generally include a beam accelerating voltage that is less than or equal to about 2 keV.

The next three steps, steps **405, 407** and **409,** are essentially identical to the steps **103, 105** and **107,** respectively, that are outlined in FIG. 1. Thus, in step **405,** a background signal attributable to a specimen mounting medium (e.g., epoxy), if any, is subtracted from the acquired backscattered electron signals that compose the image. In step **407,** the background-corrected image is analyzed to identify spatially separated particles (if any) of the specimen and to determine the boundaries and stage coordinates of such particles. In step **409,** the background-corrected image may be further analyzed to identify and determine the boundaries of individual grains within the specimen and to determine the stage coordinates of such grains. If the specimen image is small or is composed of few particles or grains, a user may visually and manually identify the boundaries, particles and grains on a graphical user interface depiction of the BSE image by using a pointing device (e.g., a computer mouse) to either point to visually observable particles/grains or to draw lines around such particles/grains. Software may then automatically translate the user input into actual stage coordinates of the identified features on the actual surface of the specimen. Alternatively, especially if the specimen image is large and/or complex, the boundaries of grains and/or particles may be determined automatically using well-known digital edge detection techniques, based on discontinuities in image brightness.

The accuracy of the identifications of particle boundaries and/or grain boundaries identified in steps **407** and **409** depends on the sharpness of the electron backscatter image(s) generated in step **403.** For example, FIG. 5 is an image of the same specimen area that is depicted in FIG. 2 but with electron beam parameters set, as in step **401** of the method **400,** to values that optimize the image sharpness of surface features. As stated above, the beam parameters that are employed during step **401** preferably include a beam accelerating voltage that is less than or equal to about 2 keV. The improved image sharpness and feature resolution of FIG. 5, as compared to FIG. 2, leads to reduced uncertainty of the boundaries of particles **201** and **202,** provides additional detail relating to the exposure of grain **202b** at the surface of the specimen and permits the identification of surface fractures on particle **201.** Further, enhanced contrast variation of particle **201** reveals bands that may be indicative of local compositional zoning. Thus, the boundaries between bands may be categorized as additional grain boundaries for purposes of subsequent compositional analysis.

The step **409** also includes selecting locations on the surface of the specimen that are to be subsequently analyzed by energy-dispersive X-ray spectroscopic analysis (EDS). The number of such EDS analyses and the specific locations on the specimen at which the analyses are to be performed may be chosen with the goal of attaining representative compositional analyses while achieving a desired resolution of compositional variation in the least amount of time. Thus, the number and locations of analyses depend upon the size of the specimen as well as the structural complexity and possible compositional complexity of the specimen. The structural complexity of the specimen may be estimated based on the observed particle boundaries, grain boundaries and/or striation boundaries.

Returning to the discussion of the method **400** that is outlined in FIG. 4, the step **411** comprises changing the electron beam parameter values (from the values that were previously set in step **403**) to a second set of values, different from the first set of values, that are suitable for EDS compositional analysis. Generally, the values of the beam parameters that are used for the EDS analyses may be chosen so as to achieve, at each analyzed point, sufficient signal intensity necessary to realize, in a minimum amount of time, the desired compositional resolution across the specimen. If the specimen is susceptible to damage from the electron beam, a further consideration in the choice of may be to obtain low-noise results without damaging the specimen. Finally, in step **413,** an EDS compositional analysis is obtained at each such location by measuring the energy spectra of X-rays that are emitted from each sampling location during the directing of the electron beam onto the respective sampling location. The EDS compositional analysis may include one or more of scanning the electron beam over the surface of the specimen and/or translating the specimen stage one or more times to expose various areas of the specimen surface to the electron beam. Generally, the electron beam parameters that are selected in step **411** and subsequently employed during the execution of step **413** include a beam accelerating voltage that greater is greater than the beam accelerating voltage that was previously employed during the execution of step **401** in order to induce X-ray signals from most elements of interest. A rule of thumb is that, during EDS analysis, the beam accelerating voltage must be about two times (i.e., 2x) as great as the binding energy of an element of interest in order to obtain a usable number of X-rays from atoms of that element. Most elements that are of general interest have X-ray emission lines in the range 0-5keV regardless of whether the emission originates from backfilling of inner shell orbitals (e.g., elements O, Na, and Mg) or outer shell orbitals for high atomic number elements (e.g., Au, Pt, U). However, because there are many overlapping X-ray emission lines in the 0-5 keV energy region, analysts generally utilize a higher voltage (e.g., 25 keV) in order to excite the emission of multiple X-ray lines from transition metals elements of still greater atomic number in order to resolve ambiguous peaks. As an example, both S and Pb exhibit an X-ray emission line at 2.3kV but Pb also exhibits another line around 10kV; therefore, resolving Pb vs S usually requires the presence of both emission lines to accurately separate them. As with with the 2x voltage rule-of-thumb noted above, these element discrimination issues imply that, for best results, most EDS work should be carried out using an electron beam acceleration voltage 20 keV or greater. Therefore, according to preferred embodiments of the present invention, an accelerating voltage of 20-30 keV is utilized during the execution of step **413.**

Although the present invention has been described in accordance with the embodiments shown, one of ordinary skill in the art will readily recognize that there could be variations to the embodiments and those variations would be within the scope of the present invention. Accordingly, many modifications may be made by one of ordinary skill in the art without departing from the scope of the appended claims.

## Claims

1. A method of mapping compositional variation within a specimen comprising:
acquiring an electron backscatter image of the surface of the specimen using a first set of electron beam parameters;
identifying, from the electron backscatter image, a plurality of locations of areas or points on the specimen to be analyzed by energy dispersive X-ray spectroscopy (EDS);
acquiring an EDS spectrum from each of the identified locations or points using a second set of electron beam parameters that are different than the first set of electron beam parameters; and
generating a map of compositional variation across the specimen from the plurality of EDS spectra.

2. A method as recited in claim 1, wherein:
the first set of electron beam parameters is chosen to optimize sharpness and spatial resolution of the electron backscatter image; and
the second set of electron beam parameters is chosen to realize a desired compositional resolution.

3. A method as recited in either claim 1 or claim 2, wherein the identifying of the plurality of locations or areas includes automatically identifying either particle boundaries or grain boundaries by digital image analysis.

4. A method as recited in any previous claim, wherein:
the first set of electron beam parameters includes the use of an electron beam acceleration voltage of less than or equal to 2 keV; and
the second set of electron beam parameters includes the use of an electron beam acceleration voltage within the range of 20-30 keV.

5. An electron microscope system comprising:
an electron source and an electron-optical column;
a sample stage within a vacuum chamber for supporting a specimen of a sample;
a first detector for detecting electrons that are backscattered from the specimen upon impingement of the electron beam onto the specimen;
a second detector for detecting X-rays emitted from the specimen upon impingement of the electron beam onto the specimen; and
one or more computer processors comprising executable instructions which, when executed by the one or more computer processors, actuate the one or more computer processors to:
cause the first detector to acquire an electron backscatter image of the surface of the specimen using a first set of electron beam parameters;
cause the second detector to acquire an EDS spectrum from each of a plurality of locations or points on the specimen surface that are identified from the electron backscatter image, wherein the acquiring of the plurality of EDS spectra uses a second set of electron beam parameters that are different than the first set of electron beam parameters; and
generate a map of compositional variation across the specimen from the plurality of EDS spectra.

6. An electron microscope system as recited in claim 5, wherein the executable instructions, when executed by the one or more computer processors, further actuate the one or more computer processors to:
cause the electron source and electron-optical column to set the first set of electron beam parameters to values that optimize sharpness and spatial resolution of the electron backscatter image; and
cause the electron source and electron-optical column to set the second set of electron beam parameters to values that realize a desired compositional resolution.

7. An electron microscope system as recited in either claim 5 or claim 6, wherein the executable instructions, when executed by the one or more computer processors, further actuate the one or more computer processors to:
identify either particle boundaries or grain boundaries within the specimen by digital image analysis of the electron backscatter image.

8. An electron microscope system as recited in any one of claims 5-7, wherein the executable instructions, when executed by the one or more computer processors, actuate the one or more computer processors to:
set an electron beam acceleration voltage of the first set of electron beam parameters to a value that is less than or equal to 2 keV; and
set an electron beam acceleration voltage of the second set of electron beam parameters to a value within the range of 20-30 keV.

9. One or more computer-readable media having defined therein executable instructions which, when executed by one or more computer processors, actuate the one or more computer processors to:
cause a first detector of an electron microscope system to acquire an electron backscatter image of the surface of a specimen using a first set of electron beam parameters;
identify, from the electron backscatter image, a plurality of locations of areas or points on the specimen to be subsequently analyzed by the electron microscope system using energy dispersive X-ray spectroscopy (EDS);
cause a second detector of the electron microscope system to acquire an EDS spectrum from each of the identified locations or points using a second set of electron beam parameters that are different than the first set of electron beam parameters; and
generate a map of compositional variation across the specimen from the plurality of EDS spectra.

10. The one or more computer-readable media of claim 9, wherein the executable instructions, when executed by the one or more computer processors, further actuate the one or more computer processors to:
cause an electron source and electron-optical column of the electron microscope to set the first set of electron beam parameters to values that optimize sharpness and spatial resolution of the electron backscatter image; and
cause the electron source and electron-optical column to set the second set of electron beam parameters to values that achieve sufficient EDS signal intensity, from each identified location or point, necessary to realize a desired compositional resolution in a minimum amount of time.

11. The one or more computer-readable media of either claim 9 or claim 10, wherein the executable instructions, when executed by the one or more computer processors, further actuate the one or more computer processors to:
identify either particle boundaries or grain boundaries within the specimen by digital image analysis of the electron backscatter image.

12. The one or more computer-readable media of any one of claims 9-11, wherein the executable instructions, when executed by the one or more computer processors, further actuate the one or more computer processors to:
set an electron beam acceleration voltage of the first set of electron beam parameters to a value that is less than or equal to 2 keV; and
set an electron beam acceleration voltage of the second set of electron beam parameters to a value within the range of 20-30 keV.
